Europäisches Patentamt

(19) European Patent Office

Office européen des brevets

(11) Numéro de publication: **0 345 124**
**A1**

# (12) DEMANDE DE BREVET EUROPEEN

(21) Numéro de dépôt: **89401429.9**

(22) Date de dépôt: **25.05.89**

(51) Int. Cl.⁴: **C 08 F 240/00**
**C 09 D 11/10**

(30) Priorité: **03.06.88 FR 8807420**

(43) Date de publication de la demande:
**06.12.89 Bulletin 89/49**

(84) Etats contractants désignés:
**AT BE CH DE FR GB IT LI LU NL**

(71) Demandeur: **NORSOLOR S.A.**
**Tour Aurore - Cédex 5 18, place des Reflets**
**F-92080 Paris la Defense 2 (FR)**

(72) Inventeur: **Badie, Paul**
**6, rue du Stade**
**Lixing-Les Saint Avold (FR)**

**Siebert, Jean-Marie**
**7A, rue Nationale**
**F-57600 Forbach (FR)**

(74) Mandataire: **Rieux, Michel**
**NORSOLOR Service Propriété Industrielle Tour Aurore**
**18, Place des Reflets Cedex no. 5**
**F-92080 Paris la Défense 2 (FR)**

(54) **Nouveau procédé de fabrication de résines de pétrole convenant pour la fabrication d'encres d'imprimerie, de vernis et de peintures.**

(57) - Procédé de fabrication de résines de pétrole aromatiques. - Procédé selon lequel on copolymérise par voie cationique une coupe aromatique $C_6$ - $C_{12}$ et le produit obtenu par polymérisation thermique d'une coupe dicyclopentadiénique.

- Application à la fabrication d'encre d'imprimerie, de vernis et de peintures.

EP 0 345 124 A1

Bundesdruckerei Berlin

**Description**

## NOUVEAU PROCEDE DE FABRICATION DE RESINES DE PETROLE CONVENANT POUR LA FABRICATION D'ENCRES D'IMPRIMERIE, DE VERNIS ET DE PEINTURES

La présente invention concerne un procédé de fabrication de résines de pétrole convenant pour la fabrication d'encres d'imprimerie, de vernis et de peintures.

Dans certaines applications, en particulier dans le domaine des encres d'imprimerie, des vernis et des peintures, il est nécessaire de disposer de résines de pétrole qui présentent un point de ramollissement élevé, associé à une bonne diluabilité et une bonne solubilité dans les solvants, en particulier dans les solvants aliphatiques. Les résines de pétrole dont on dispose jusqu'à présent, présentent dans les solvants, en particulier dans les solvants aliphatiques, une diluabilité et une solubilité trop faible pour pouvoir envisager leur utilisation dans la fabrication d'encres d'imprimérie et de vernis.

La présente invention concerne un procédé de fabrication de résines de pétrole aromatiques convenant pour la fabrication d'encres d'imprimerie, de vernis et de peintures caractérisées en ce qu'elles sont préparées par copolymérisation cationique d'un produit constitué d'une coupe aromatique C6 - C12 et du produit obtenu par la polymérisation thermique d'une coupe dicyclopentadiénique, les produits étant mis en oeuvre dans un rapport pondéral

## résine dicyclopentadiénique

### coupe aromatique

compris entre 0 et 100 et plus particulièrement entre 0 et 50 des deux types de résines, le premier type étant constitué du produit obtenu par la polymérisation thermique d'une coupe dicyclopentadiénique, le second type étant constitué d'une coupe aromatique en $C_6$ - $C_{12}$, les types de résines étant mises en oeuvre dans un rapport pondéral

## résine dicychlopentadiénique

### coupe aromatique

compris entre 0 et 100 et plus particulièrement entre 0 et 50 et la résine obtenue par polymérisation thermique d'une coupe dicyclopentadiénique étant solubilisée dans la coupe aromatique $C_6$ - $C_{12}$ préalablement à la copolymérisation des deux types de produits.

On a trouvé que les résines de pétrole aromatiques obtenus selon le procédé de la demande présentaient à la fois des points de ramollissement élevés associés à de bonnes diluabilité et solubilité dans les solvants, en particulier aliphatiques, ce qui permet leur emploi dans la fabrication d'encres d'imprimerie, de peintures et de vernis.

Les résines fabriquées selon le procédé de la demande sont obtenues en copolymérisant par voie cationique deux types de produits. Le premier type de produits est constitué du produit obtenu par la polymérisation thermique d'une coupe dicyclopentadiénique. La polymérisation thermique de la coupe dicyclopentadiénique est réalisé de façon connue par exemple en maintenant à 240-270°C pendant 2 à 10 heures un mélange constitué de la coupe dicyclopentadiénique et d'un solvant aromatique et dans un rapport pondéral 50/50. La coupe dicyclopentadiénique qui a généralement la composition suivante (% en poids) provient du crackage à la vapeur d'eau d'une coupe pétrolière :

| | | | |
|---|---|---|---|
| - dicyclopentadiène | : | 70 | - 95 |
| - codimères dicyclopentadiène | : | 1 | - 6 |
| - méthyl-dicyclopentadiène | : | 0,2 | - 10 |
| - tri-méthyl dicyclopentadiène | : | 0,005 | - 2 |
| - 5-vinyl-norbornène | : | 1 | - 2 |
| - isopropylnorbornène | : | 1 | - 12 |
| - ( légers non identifiés) | : | inférieurs à 30 | |

Le second type de produits mis en oeuvre dans le procédé de l'invention est constitué d'une coupe aromatique en $C_6$ - $C_{12}$. Cette coupe aromatique en $C_6$ - $C_{12}$ provient le plus souvent du craquage à la vapeur d'eau d'une charge pétrolière qui inclue le naphta, le kérosène et le gas-oil, et de façon générale, toute charge habituellement utilisée comme charge pétrolière. Ces charges pétrolières ont généralement un point d'ébullition compris entre 20 et 245°C : par fractionnement et distillation on recueille des coupes aromatiques en $C_6$ - $C_{12}$ et des coupes contenant des dioléfines cycliques. La composition de cette coupe $C_6$ - $C_{12}$ est variable et dépend de la nature de la charge pétrolière, en général la composition des produits polymérisables est la suivante (en % en poids) :

2

EP 0 345 124 A1

| - styrène | : | 0,5 | - | 14 |
| - allyl-benzène | : | 0,5 | - | 2 |
| - α méthyl-styrène | : | 1 | - | 8 |
| - cis β-méthyl-styrène | : | 0,2 | - | 1 |
| - trans β-méthyl styrène | : | 1 | - | 6 |
| - vinyl toluénes | : | 7 | - | 22 |
| - indène | : | 5 | - | 21 |
| - méthyl-indène + di-vinyl benzène | : | 0,2 | - | 9 |
| - dicyclopentadiène | : | 0,4 | - | 12 |

Le procédé de la présente demande consiste à réaliser une copolymérisation cationique des deux types de produits précédemment définis, le produit obtenu par polymérisation d'une coupe dicyclopentadiénique étant préalablement solubilisée dans la coupe aromatique $C_6$ - $C_{12}$. La polymérisation cationique est réalisée de façon connue, à une température au plus égal à 50°C en présence d'acides de Lewis utilisés en quantité, comprises entre 0,02 et 3 % en poids par rapport aux poids des deux produits mise en oeuvre : comme acides de Lewis on peut citer le triflorure de bore ou ses complexes.

Selon l'invention les deux types de produits mis en oeuvre pour la réalisation du procédé de l'invention sont utilisées en toutes proportions pondérales

résines   dicyclopentadiénique

coupe aromatique

compris entre 0 et 100 et plus particulièrement de 0 à 50.

Les résines obtenues selon le procédé de l'invention conviennent dans de nombreux domaines d'application. En particulier grâce à un point de ramollissement élevé supérieur à 120°C associé à de bonnes diluabilité et solubilité dans les solvants en particulier aliphatiques, ces résines conviennent pour la fabrication de vernis, de peintures et d'encres d'imprimérie : dans ce cas elles sont par exemple additionnées à raison de 40 à 60 % en poids avec 60 à 40 % d'un mélange de solvants aliphatiques. Les exemples suivants illustrent la présente invention. Toutes les quantités sont exprimées en parties en poids.

Exemple 1 : polymérisation thermique

a) Fabrication de la résine dicyclopentadiénique par polymérisation thermique;
Dans un autoclave de type Grignard en acier inoxydable, muni d'une double enveloppe permettant le chauffage par circulation d'huile chaude, d'une spire interne en acier inox permettant le refroidissement par circulation d'eau froide, et d'un agitateur type "ancre marine", on introduit 8 parties d'une coupe aromatique $C_6$ - $C_{12}$ qui présente la composition suivante (% en poids) :

| styrène | 2,89 |
| α - méthyl styrène | 1,79 |
| β - méthyl styrène | 0,68 |
| trans β méthyl styrène | 2,25 |
| vinyl toluènes | 22,01 |
| indène | 12,93 |
| méthyl indènes + di-vinyl benzène | 3,37 |
| dicyclopentadiène | 0,61 |

On rajoute ensuite dans le réacteur 71 parties d'une coupe dicyclopentadiénique qui présente la composition suivante (% en poids) :

3

| dicyclopentadiène | 75,36 |
|---|---|
| méthyl dicyclopentadiène | 0,28 |
| tri-méthyl dicyclopentadiène | 0,05 |
| codimères dicyclopentadiène | 3,43 |
| isopropénylnorbornène | 11,08 |
| 5 - vinyl norbornène | 1,12 |
| légers | 0,84 |
| on identifiés | 3,64 |

On additionne ensuite 21 parties de xylène. Le mélange réactionnel est chauffé à une température de 270°C pendant 8 heures : la pression atteinte dans le réacteur est de 9 bars.

On receuille la solution de résine : le rendement réactionnel est de 64,7 % par rapport à la charge mise en oeuvre, le taux de transfromation des produits réactifs est de 93 %.

La résine obtenue présente un point de ramolissement bille-anneau de 155°C (déterminé selon la norme ASTM E 28) et un point trouble de 60°C déterminé dans un mélange de résine et d'isododécane (50 -50).

b) Fabrication d'une résine selon l'invention

La résine fabriquée ci-dessus à partir d'une coupe dicyclopentadiénique est solubilisée dans une coupe aromatique C6 - C12.

La coupe aromatique $C_6$ - $C_{12}$ présente la composition suivante :

| | | |
|---|---|---|
| - Styrène | : | 4,78 |
| - $\alpha$ méthyl-styrène | : | 1,77 |
| - cis $\beta$ méthyl-styrène | : | 2,40 |
| - trans $\beta$ méthyl-styrène | : | 2,54 |
| - vinyl-toluène | : | 15,74 |
| - indène | : | 10,06 |
| - méthyl-indène | : | 7,62 |

On met en oeuvre les produits en quantités variables. La polymérisation est conduite en présence d'un acide de Léwis constitué de trifluorure de bore. Le tableau 1 résume les quantités de réactifs utilisées, les conditions opératoires et les caractéristiques des résines finies obtenues.

4

Tableau 1

| ESSAI | 1 | 2 | 3 | 4 | 5 | 6 |
|---|---|---|---|---|---|---|
| Composition du mélange (% poids) | | | | | | |
| Coupe C$_6$ - C$_{12}$ | 90,9 | 90,9 | 85 | 85 | 85 | 85 |
| Résine dicyclopentadiénique | 9,1 | 9,1 | 15 | 15 | 15 | 15 |
| Conditions opératoires | | | | | | |
| Trifluorure de bore (g/h) | 4,2 | 3,9 | 4,1 | 4,4 | 4,1 | 4,4 |
| Température (°C) | 25 | 25 | 25 | 25 | 30 | 30 |
| Temps de séjour (minutes) | 30 | 30 | 30 | 30 | 30 | 30 |
| Rendement % | 43,4 | 39,8 | 38,8 | 45,6 | 42,7 | 45,7 |
| Taux de transforma-tion % de la coupe C$_6$-C$_{12}$ | 85,6 | 78,7 | 72,2 | 84,8 | 79,4 | 85 |
| Point de ramollissement (bille-anneau °C) | 131 | 138 | 138 | 141 | 139 | 141 |
| Point trouble : °C (50 % isododécane) | 12 | 18 | 12 | 11 | 10 | 11 |

Le point de ramollissement bille-anneau est déterminé selon la norme ASTM E 28, le point trouble est déterminé dans le mélange constitué de la résine et d'isododécane (50 - 50 en poids).

Exemple 2
L'exemple 1 est répété mais en utilisant une coupe C$_6$-$_{C12}$ qui présente la composition suivante :

| | | |
|---|---|---|
| Styrène | : | 10,17 |
| α Me styrène | : | 2,11 |
| Cis β Me styrène | : | 4,22 |
| Trans β Me Styrène | : | 3,91 |
| Vinyl toluènes | : | 11,19 |
| Indène | : | 20,86 |
| Me styrène | : | 3,21 |

Le tableau 2 résume les conditions opératoires et les résultats obtenus.

Tableau 2

| ESSAI | 1 | 2 | 3 |
|---|---|---|---|
| Composition du mélange (% poids) | | | |
| Coupe $C_6 - C_{12}$ | 85 | 85 | 85 |
| Resine dicyclopentadiénique | 15 | 15 | 15 |
| Conditions opératoires | | | |
| Trifluorure de bore (g/h) | 4,6 | 5,6 | 5,6 |
| Température (°C) | 30 | 30 | 50 |
| Temps de séjour (minutes) | 30 | 30 | 30 |
| Rendement % | 43,5 | 51,7 | 55,2 |
| Taux de transformation de la coupe $C_6-C_{12}$ ( % ) | 52 | 67, | 73,4 |
| Point de ramollissement | 156 | 156 | 153 |
| Point trouble : °C (50 % isododécane) | 65 | 65 | 60 |

## Revendications

1 - Procédé de fabrication de résines de pétrole aromatiques convenant pour la fabrication d'encres d'imprimerie, de vernis et de peintures caractérisées en ce qu'elles sont préparées par copolymérisation cationique d'un produit constitué d'une coupe aromatique $C_6 - C_{12}$ et du produit obtenu par la polymérisation thermique d'une coupe dicyclopentadiénique, les produits étant mis en oeuvre dans un rapport pondéral:

résine dicyclopentadiénique

coupe aromatique

compris entre 0 et 100 et plus particulièrement entre 0 et 50, la résine obtenue par polymérisation thermique d'une coupe dicyclopentadiénique étant solubilisée dans la coupe aromatique $C_6 - C_{12}$ préalablement à la copolymérisation des deux types de produits.

2 - Procédé selon 1 caractérisé en ce que la copolymérisation cationique est réalisée à une température au plus égale à 50°C, en présence d'acides de Léwis.

3 - Procédé selon 1 et 2 caractérisé en ce que la polymérisa tion thermique de la coupe dicyclopentadiénique est réalisée en présence d'un solvant aromatique en maintenant le mélange à une température comprise entre 240 - 270°C pendant 2 à 10 heures.

4 - Application des résines obtenues selon 1 à 3 à la fabrica tion d'encres d'imprimerie, de vernis et de peintures.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 263 259  (EXXON RESEARCH AND ENGINEERING CO.) <br> * Revendications 1-13 * <br> --- | 1,3 | C 08 F 240/00 <br> C 09 D  11/10 |
| A | US-A-4 558 107  (EVANS et al.) <br> * Revendication 1 * <br> --- | 1,3 | |
| A | US-A-4 283 518  (IWASHITA et al.) <br> * Revendications 1,2 * <br> ----- | 1,3 | |

DOMAINES TECHNIQUES
RECHERCHES (Int. Cl.4)

C 08 F
C 09 D

Le présent rapport a été établi pour toutes les revendications

| Lieu de la recherche | Date d'achèvement de la recherche | Examinateur |
|---|---|---|
| LA HAYE | 04-07-1989 | GLIKMAN J-F.M. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
........................................................................................
& : membre de la même famille, document correspondant

EPO FORM 1503 03.82 (P0402)